Europäisches Patentamt

European Patent Office

Office européen des brevets

(11) Veröffentlichungsnummer: **0 325 193 B1**

## EUROPÄISCHE PATENTSCHRIFT

(45) Veröffentlichungstag der Patentschrift: **02.12.92**

(21) Anmeldenummer: **89100680.1**

(22) Anmeldetag: **17.01.89**

(51) Int. Cl.⁵: **C12G 1/06**

(54) **Verfahren zur Herstellung von Schaumwein.**

(30) Priorität: **20.01.88 DE 3801442**
**30.03.88 DE 3810753**
**08.11.88 DE 3837846**

(43) Veröffentlichungstag der Anmeldung:
**26.07.89 Patentblatt 89/30**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**FR-A- 2 372 228**
**GB-A- 2 001 341**
**US-A- 1 995 275**

**CHEMICAL ABSTRACTS, Band 78, 1973, Seite
358, Zusammenfassung Nr. 27863f, Columbus, Ohio, US; R.G. GOGOBERIDZE et al.:
"Use of yeast autolyzates during preparation
of Georgian white table wines", & TR., GRUZ.
NAUCH.-ISSLED. INST. PISHCH. PROM. 1971,
4, 113-21**

(73) Patentinhaber: **Biodyn AG**
**Industriestr. 31**
**CH-8305 Dietlikon(CH)**

(72) Erfinder: **Lembke, Andreas, Prof. Dr. Dr.**
**Eutiner Strasse 1**
**W-2420 Eutin-Sielbeck(DE)**
Erfinder: **Underberg, Emil**
**Industriestrasse 31**
**CH-8305 Dietlikon(CH)**
Erfinder: **Strobel, Hans Joachim, Dr.**
**Opfikonerstrasse 33**
**CH-8303 Bassersdorf(CH)**

(74) Vertreter: **Goddar, Heinz J., Dr. et al**
**FORRESTER & BOEHMERT Franz-
Joseph-Strasse 38**
**W-8000 München 40(DE)**

**Beschreibung**

Die Erfindung betrifft ein Verfahren zur Herstellung von Schaumwein, bei dem von entkeimtem Wein (sogenanntem Grundwein) ausgegangen wird, dem Hefe und Saccharose (sogenannte Fülldosage) zugegeben wird, und dann der tiragierte Grundwein unter Druckabschluß einer zweiten Gärung unterworfen wird und die in Lösung gehenden Inhaltsstoffe der Hefe im entstehenden rohen Schaumwein enthalten sind, und bei dem dann die unlöslichen Bestandteile abgeschieden und dem rohen Schaumwein Saccharose und eventuell weitere Zusätze (sogenannte Versanddosage) zugesetzt wird.

Unter Schaumwein werden hier und im folgenden auch Sekt, Champagner, Perlwein und dergleichen verstanden.

Sobald die Saccharose aufgebraucht ist, ist der zweite Gärprozeß beendet, die Hefezellen sterben langsam ab und ihre löslichen Inhaltsstoffe gehen durch Autolyse in Lösung. Diese Inhaltsstoffe sind in feinen Schaumweinen erwünscht, weil sie das Aroma und/oder das Mousseux verbessern. Um diese Inhaltsstoffe möglichst weitgehend in Lösung zu bringen, läßt man den rohen Schaumwein nach Abschluß der zweiten Gärung noch längere Zeit, das heißt mehrere Monate, gelagert.

Diese Lagerzeit kann man beim Tankgären abkürzen, indem man durch Rühren das Inlösunggehen der Inhaltsstoffe beschleunigt.

Aus der DE-OS 28 22 906 ist es vorbekannt, bei einem Verfahren der eingangs genannten Art dem Grundwein Hefeautolysat zuzusetzen mit dem Ziel, die Lagerzeit abzukürzen. Die so als Autolysat zugesetzten Inhaltsstoffe sind während der ganzen zweiten Gärung in Lösung und unterliegen dabei dem Stoffwechselzugriff der Gärhefe.

Aufgabe der Erfindung ist es, die Lagerzeit zum Inlösungbringen hinreichender Mengen von Hefeinhaltsstoffen abzukürzen. Die Zersetzung dieser in Lösung gegangenen Inhaltsstoffe durch noch aktive Gärhefe und die Inkaufnahme von anderen Nachteilen hinsichtlich Aroma und Mousseux sollen dabei vermieden werden.

Die Erfindung ist dadurch gekennzeichnet, daß dem Grundwein vor dem Ende der zweiten Gärung zusätzlich eine zweite Hefeportion zugegeben wird, deren Autolysestabilität durch Schädigung der Zellwände vor der Zugabe an den Grundwein herabgesetzt ist.

Bei Flaschengärung gibt man die zweite Hefeportion vor der zweiten Gärung dem Grundwein zu.

Bei Tankgärung kann man die zweite Hefeportion auch vor der zweiten Gärung zugeben, man kann sie aber auch während der zweiten Gärung zugeben, da es kein Problem ist, die zweite Hefeportion ohne wesentlichen Druckverlust in den für die zweite Gärung unter Druck stehenden Tank einzuschleusen. Auf diese Weise hat man bei der Tankgärung die Möglichkeit, die Zeitspanne, über die während der zweiten Gärung die zweite Hefeportion der Gärung ausgesetzt ist, den jeweiligen Gegebenheiten entsprechend zu wählen. Als zweckmäßig hat es sich erwiesen, die zweite Hefeportion bei der Tankgärung erst nach Ablauf der Hälfte der Gesamtzeitspanne für die zweite Gärung zuzugeben.

Die zweite Hefeportion unterliegt schneller als die erste Hefeportion der Autolysation und gibt ihre Inhaltsstoffe entsprechend früher ab. Dementsprechend früher sind auch insgesamt genügend Inhaltsstoff` in dem rohen Schaumwein in Lösung gegangen, so daß man die Lagerzeit entsprechend abkürzen kann. Auf der anderen Seite gehen die Inhaltsstoffe der zweiten Hefeportion nicht sofort in Lösung, sondern erst nach Ablauf einer Zeitspanne, die es braucht, um die zweite Hefeportion zu autolysieren. Diese Zeitspanne kann man durch Wahl der Intensität der Vorbehandlung der zweiten Hefeportion und bei der Tankgärung zusätzlich durch Wahl des Zeitpunktes der Zugabe der zweiten Hefeportion so einstellen, daß die Inhaltsstoffe der zweiten Hefeportion im wesentlichen erst gegen Ende der stürmischen Phase der zweiten Gärung in Lösung gehen und dadurch nicht mehr so stark dem Stoffwechselzugriff der noch aktiven ersten Hefeportion ausgesetzt sind.

Besonders günstige Verhältnisse erzielt man dadurch, daß die Autolysestabilität der zweiten Hefeportion so eingestellt ist, daß der Prozentanteil der Zellen der zweiten Hefeportion, deren Zellwände durch Autolysation aufgebrochen sind,wenn 60 % der eingesetzten Saccharose durch die zweite Gärung aufgebraucht sind, 10 bis 20 %, vorzugsweise 18 %, der eingesetzten Menge der zweiten Hefeportion beträgt. Man kann leicht nachmessen, ob die eingesetzte zweite Hefeportion auf die richtige Autolysestabilität eingestellt war. Zu diesem Zweck wird der Saccharosegehalt während der zweiten Gärung laufend gemessen und wenn er auf 60 % abgesunken ist, wird aus dem in zweiter Gärung befindlichen Grundwein eine Portion entnommen. Die in dieser Portion enthaltenen Hefezellen mit aufgebrochenen Zellwänden, werden selektiv eingefärbt, vorzugsweise mit Methylenblau. Die so gekennzeichneten Hefezellen der zweiten Hefeportion mit aufgebrochenen Zellwänden werden ausgezählt. Außerdem werden die restlichen Zellen der zweiten Hefeportion, die sich durch unregelmäßige Form gegenüber denen der ersten Hefeportion unterscheiden, ausgezählt. Die erste Zählung wird dann mit der Summe beider Zählungen rechnerisch

2

ins Verhältnis gesetzt.

Möglicherweise ist ein Anteil der ersten Hefeportion bei der Messung bereits in Autolysation gegangen. Dieser Anteil ist dann aber, da bei der Messung immerhin noch 40 % der eingesetzten Saccharose vorhanden sind, so klein, daß er vernachlässigt werden kann.

Die Autolysestabilität der Hefe der zweiten Portion wird am einfachsten herabgesetzt durch Erwärmen auf 35 bis 55°, vorzugsweise 48° C (Grad Celsius), und zwar über eine Zeitdauer von 10 bis 40, vorzugsweise 20 Stunden unter gleichzeitigem Rühren. Man kann die Autolysestabilität auch auf andere Weise herabsetzen, zum Beispiel durch Erwärmen durch Bestrahlen, durch schockartiges mehrmaliges Einfrieren und Auftauen, schockartiges mehrmaliges Ansetzen und Absetzen von Hochdruck in der Größenordnung von 300 bar oder durch Einwirkung von Ultraschall. Mit diesen physikalischen Verfahren ist es möglich, durch entsprechende Intensität oder Dauer der Einwirkung, die Autolysestabilität in genau vorbestimmtem Maße herabzusetzen.

Man kann auch mit chemischen Verfahren die Autolysestabilität herabsetzen, aber die physikalischen sind bevorzugt, weil man dadurch eine rückstandsfreie zweite Hefeportion erhält.

Durch Probieren findet man die den jeweiligen Umständen entsprechenden optimalen Bedingungen für die Vorbehandlung der zweiten Hefeportion.

Wenn man eine entsprechend große zweite Hefeportion zusetzt, ist nach Abschluß der zweiten Gärung bereits die benötigte Menge an Inhaltsstoffen in Lösung gegangen und man kann auf eine anschließende Lagerzeit ganz verzichten und unmittelbar im Anschluß an den Abschluß der zweiten Gärung die unlöslichen Bestandteile, also auch die dann noch nicht autolysierte Hefe, abscheiden.

Setzt man eine zweite Portion ein, die wesentlich kleiner ist als die erste Portion, dann reichen die Inhaltsstoffe der zweiten Portion nicht aus, um die Inhaltsstoffe der ersten Portion vollständig zu ersetzen, und man muß sich entweder mit einer geringeren Menge Inhaltsstoffe begnügen oder an die zweite Gärung eine Lagerzeit anschließen, bis aus der ersten Portion ein genügender Rest an Inhaltsstoffen in Lösung gegangen ist.

Man kann auf diese Weise auch mehr Inhaltsstoffe in Lösung bringen als die erste Hefeportion, die für die Gärung eingesetzt wird, insgesamt enthält und so eine Konzentration der Inhaltsstoffe erzielen, die bei dem bekannten Verfahren mit noch so langer Lagerzeit nicht erzielbar ist. Hat man eine längere Lagerzeit vorgesehen, dann kommt man mit einer schwächeren Behandlung zur Autolysation aus, andernfalls nimmt man sie intensiver vor.

Das Verhältnis der eingesetzten Menge der zweiten Hefeportion zur eingesetzten Menge der ersten Hefeportion wählt man unter Berücksichtigung der gewünschten Lagerzeit und im Hinblick auf das angestrebte Ergebnis hinsichtlich Aroma und Mousseux.

Gute Ergebnisse erzielt man, indem man 0,01 bis 0,06 kg (Kilogramm), vorzugsweise 0,02 kg, Trockensubstanz erste Hefeportion pro 100 Liter und 0,5 bis 2 mal, vorzugsweise 1 mal soviel, jeweils bezogen auf das Trockengewicht, zweite Hefeportion jeweils vor Beginn der zweiten Gärung einsetzt.

Vorzugsweise wird die Lagerzeit abgebrochen und die unlöslichen Bestandteile werden abgeschieden, sobald aus beiden eingesetzten Hefeportionen zusammengenommen Inhaltsstoffe in Lösung gegangen sind in einer Menge, die 95 bis 120%, vorzugsweise 110% der löslichen Inhaltsstoffe der eingesetzten ersten Hefeportion entspricht.

Man kann für die erste Hefeportion und die zweite Hefeportion unterschiedliche Hefestämme einsetzen. Für den Hefestamm der ersten Hefeportion wird eine Sekthefe eingesetzt. Je nach den Gärbedingungen setzt man zweckmäßig eine Sekthefe mit Warmgärvermögen bei 18 bis 25°C oder eine solche mit Kaltgärvermögen bei 9 bis 11°C ein. Die eingesetzte Sekthefe sollte die Fähigkeit haben, Saccharose vollständig unter $CO_2$-Druck von 4 bis 7 bar zu vergären.

Für die zweite Hefeportion kommt es nur auf die Inhaltsstoffe an und nicht auf das Gärvermögen. Man kann da also auch einen anderen Hefestamm einsetzen. Bevorzugt wird jedoch für beide Hefeportionen der gleiche Hefestamm eingesetzt, um möglichst das gleiche Ergebnis zu erzielen wie nach dem Stand der Technik mit langer Lagerzeit.

Für beide Hefeportionen kommen einer oder für jede der beiden Hefeportionen ein jeweils anderer der nachfolgend aufgeführten, Hefestämme in Betracht:

1) Saccharomyces cerevisiae, Strain Champagner, DSM (Deutsche Sammlung für Mikroorganismen, Göttingen) unter der Nummer 70457

2) Saccharomyces cerevisiae, Strain Kaltgärhefe, DSM Nr. 70469

3) Saccharomyces cerevisiae, Strain Rüdesheimer, DSM Nr. 70451

4) Saccharomyces cerevisiae, Strain Champagner-Ay, DSM Nr. 70459.

Diese vier Stämme waren bereits vor dem 20. Januar 1988 der Öffentlichkeit zugänglich.

Die Erfindung wird nun anhand der Zeichnung und einiger Ausführungsbeispiele näher erläutert.

3

EP 0 325 193 B1

BEISPIEL 1 (Tankgärung)

100 l geschönter und entkeimter Grundwein gemischt aus ausgewählten, durchgegorenen Rieslingweinen mit einem Alkoholgehalt von 10 bis 11 Volumenprozent und einem pH von 3,2 werden bei 18°C bereitgehalten.

Dieser Grundweinportion wird die Fülldosage untermischt. Die Fülldosage besteht aus 2,5 kg (Kilogramm) Saccharose, 0,02 kg Trockensubstanz einer ersten Hefeportion und 0,02 kg Trockensubstanz einer zweiten Hefeportion.

Die erste Hefeportion besteht aus einer aktiven, sterilen, gesunden Reinzucht von saccaromyces cerevisiae, Strain Champagner, DSM Nr. 70457.

Die zweite Hefeportion besteht aus einer sterilen Reinzucht des gleichen Hefestammes wie für die erste Hefeportion, der jedoch unmittelbar vor dem Zusetzen zum Grundwein unter Sterilbedingungen 20 Stunden lang bei 48°C gerührt wurde.

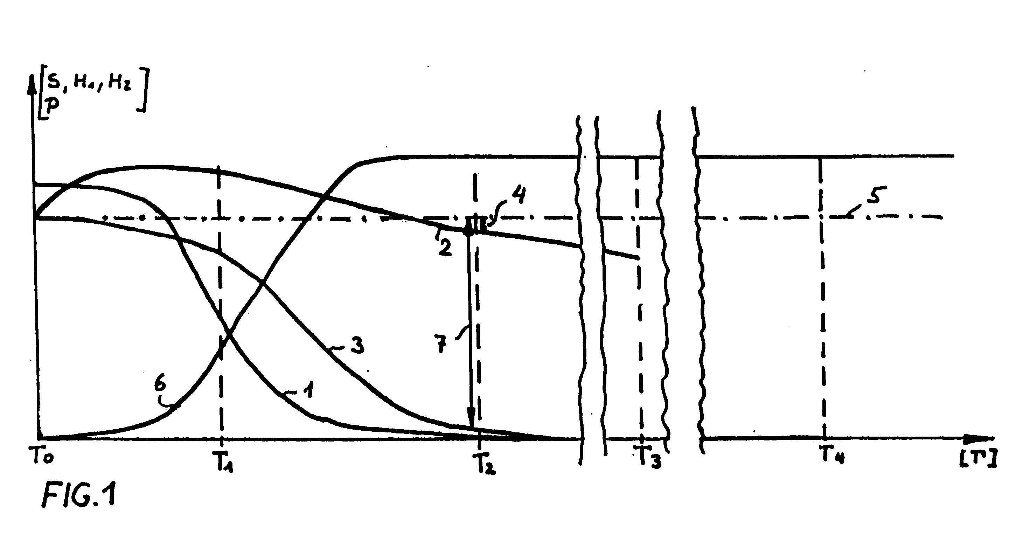

Der vor der zweiten Gärung mit der Fülldosage, also der ersten und der zweiten Hefeportion, versetzte Grundwein wird in einen 110 l (Liter) fassenden, druckdicht verschließbaren Tank abgefüllt, bei 18°C stehengelassen und dabei ab und zu, vor allen Dingen bei Beginn, gerührt. Zum Zeitpunkt T0 beginnt die zweite Gärung. Zum Zeitpunkt T2 (vergleiche Figur 1), das ist 20 Tage nach Beginn der zweiten Gärung, ist die zweite Gärung abgeschlossen. Anschließend wird der Inhalt des Tanks weitere 20 Tage Lagerzeit gelagert und dabei ab und zu gerührt, und zwar unter Aufrechterhaltung des Druckabschlusses. Dann wird der Inhalt des Tanks durch Kühlen mittels eines Kühlmantels auf -4°C gekühlt. Das dauert einen Tag. Zwei weitere Tage wird der gekühlte Tankinhalt stehengelassen, bis sich der Weinstein abgeschieden hat.

Ist dies geschehen, dann werden zum Zeitpunkt T3, das ist 43 Tage nach Beginn der zweiten Gärung, die Festbestandteile, das sind im wesentlichen die nicht in Lösung gegangenen Reste der Hefe und der Weinstein, unter Aufrechterhaltung des bei der zweiten Gärung entstandenen Drucks durch Gegenfiltration entfernt.

In dem nun vorliegenden rohen Schaumwein, der sich wieder auf 18°C erwärmt, sind insgesamt 120 % (Prozent) Inhaltsstoffe, bezogen auf die eingesetzte Menge der ersten Hefeportion, gelöst. Davon rühren fast 100 % tatsächlich von der zweiten Hefeportion und der Rest von der ersten Hefeportion.

Es wird eine Versanddosageportion bereitgestellt, bestehend aus Saccharosesirup entsprechend 0,8 kg reiner Saccharose. Diese Versanddosageportion wird im rohen Schaumwein aufgelöst unter Aufrechterhaltung des bei der zweiten Gärung entstandenen Drucks und dann wird unter weitgehender Aufrechterhaltung dieses Drucks der Schaumwein auf Flaschen abgefüllt, die druckdicht verschlossen werden.

Der Ablauf der zweiten Gärung wird nun anhand der Diagramme aus Figur 1 näher erläutert. Die Horizontale Achse ist die Zeitachse mit der Zeit T in Tagen. Auf der Vertikalachse sind mit dem gleichen linearen Maßstab aufgetragen der Saccharosegehalt S in Gramm pro Liter, die Menge der noch nicht autolysierten Hefe der ersten Hefeportion H1 und die Menge der noch nicht autolysierten Hefe der zweiten Hefeportion H2, jeweils in Prozent von der eingesetzten Hefemenge H1 beziehungsweise H2 und der Druck P in bar. Auf der horizontalen Achse gilt H1 = 0; H2 = 0; S = 0; und P = 1 bar.

Bei der Zeit T0 beginnt die zweite Gärung. Die Kurve 1 zeigt den Saccharosegehalt, die Kurve 2 den Gehalt an intakter Hefe der ersten Hefeportion H1, die also noch nicht autolysiert ist, und die Kurve 3 den Gehalt an intakter zweiter Hefeportion H2, die also noch nicht autolysiert ist. Die Kurve 6 zeigt den Verlauf des Druckes P.

Der Abstand zwischen der strichpunktierten Linie 5, die 100% von H1 und H2 anzeigt, und der Kurve 2 entsprechend dem Doppelpfeil 4 kennzeichnet den Prozentanteil der ersten Hefeportion H1, der autolysiert ist, bezogen auf die eingesetzte Menge der ersten Hefeportion H1. Der Abstand zwischen der strichpunktierten Linie 5 und der Kurve 3 entsprechend dem Doppelpfeil 7 kennzeichnet den Prozentanteil der zweiten Hefeportion H2, der autolysiert ist.

Zum Zeitpunkt T1, das sind 10 Tage nach Beginn der zweiten Gärung, sind 60% der eingesetzten Saccharose verbraucht und 14% der Hefezellen der zweiten Hefeportion H2 autolysiert. Zum Zeitpunkt T2, das ist etwa 20 Tage nach Beginn der zweiten Gärung, ist die zweite Gärung zu Ende, denn die gesamte Saccharose ist aufgebraucht und fast die gesamte zweite Hefeportion ist autolysiert. Der Prozentsatz gemäß Doppelpfeil 4 beträgt 8 %.

Bemerkenswert ist, daß das im fertigen Sekt in Lösung gegangene Autolysat im wesentlichen bereits zum Zeitpunkt T2 vorgelegen hat. Frisch in Lösung gegangenes Autolysat besteht auch aus kolloidallöslichen Proteinfragmenten, die nach einiger Lagerzeit ausfallen. Wenn das erst im fertigen Schaumwein geschieht, kann das zu Trübungen führen.

Zum Zeitpunkt T3, das ist 23 Tage nach T2, wird die Lager zeit abgebrochen, indem die unlöslichen Bestandteile abgeschieden werden. In der Lagerzeit von T2 bis T3 scheiden sich die erwähnten Trübungen

4

ab und können im Zeitpunkt T3 mit ausgefiltert werden. In diesem Zusammenhang ist besonders vorteilhaft in Verbindung mit der Erfindung, daß im Zeitpunkt T3, also beim Abbrechen der Lagerzeit, ein hoher Prozentsatz des Autolysats altes Autolysat ist.

Das ist vorteilhaft, weil junges Autolysat, das gerade erst entstanden ist und deshalb noch viele kolloidal gelöste Proteinfragmente enthält, die zu Trübungen im Fertigsekt führen können.

Beim Stande der Technik wird erst zum Zeitpunkt T4, das ist etwa 360 Tage nach Beginn der zweiten Gärung, die Lagerzeit beendet und die Festbestandteile abgezogen.

Dies zeigt, daß die Erfindung vorteilhaft ist einerseits zur Abkürzung der Lagerzeit, zur Vergrößerung des mousseux- und aromabedingten Autolysatgehaltes und andererseits zur Vermeidung von Trübung, und zwar sowohl im Zusammenhang mit dem Tankgärverfahren als auch im Zusammenhang mit dem Flaschengärverfahren.

Beurteilung nach Ablauf einer 24tägigen ruhigen Lagerung der fertig abgefüllten Flaschen.

Aroma: Champagnertypisches Aroma, reif = D

Mousseux: hochfeinperliges Champagnermousseux = A

Niederschlag: klar = G

BEISPIEL 2 (Flaschengärung nach der Champagner-Methode)

Wie Beispiel 1, jedoch mit dem Unterschied, daß der Grundwein geschönt und bei -4°C weinsteinstabilisiert wird und daß nach der klassischen Champagner-Methode die zweite Gärung nicht in einem Tank, sondern in Flaschen mit einem Füllvolumen von je 0,75 l erfolgt. Dazu wird der mit der Fülldosage versetzte Grundwein auf 135 Flaschen abgefüllt. Die Flaschen werden mit Kronenkorken verschlossen.

Die Flaschen werden liegengelassen bei 18°C. Nach 20 Tagen ist die zweite Gärung abgeschlossen. Anschließend werden die Flaschen 40 Tage bei 14°C gelagert. Dann werden die Flaschen umgeschlagen, damit sich die Hefe von der Flaschenwand löst. Die Flaschen werden anschließend auf Rüttelpulte aufgesteckt und während 14 Tagen "gerüttelt", das heißt die Flaschen werden nach und nach aus der waagerechten Lage unter Drehen mit dem Flaschenhals nach unten aufgerichtet. Dadurch sammeln sich im Flaschenhals die Feststoffe, die im Gefrierbad verfestigt und dann durch Öffnen des Flaschenverschlusses (Degorgieren) herausgeschleudert werden. Dann wird die Versanddosage in der gleichen Menge wie nach Beispiel 1, gleichmäßig aufgeteilt auf die 135 Flaschen, zugesetzt und die Flaschen werden endgültig verkorkt.

Beurteilung nach Ablauf einer 24tägigen ruhigen Lagerung der fertig abgefüllten Flaschen.

Aroma: Champagnertypisches Aroma, reif = D

Mousseux: hochfeinperliges Champagnermousseux = A

Niederschlag: klar = G

BEISPIEL 3 (Tankgärung)

Wie Beispiel 1, jedoch mit dem Unterschied, daß nur die erste Hefeportion H1 mit der Fülldosage vor Beginn der zweiten Gärung in den Grundwein gegeben wird, während die zweite Hefeportion H2 zum Zeitpunkt T6, das sind 16 Tage nach Beginn der zweiten Gärung, in den Tank eingeschleust wird. Außerdem ist die zweite Hefeportion 30 Stunden Lang bei 48°C gerührt worden, so daß die Autolysestabilität der zweiten Hefeportion etwas geringer ist als nach Beispiel 1.

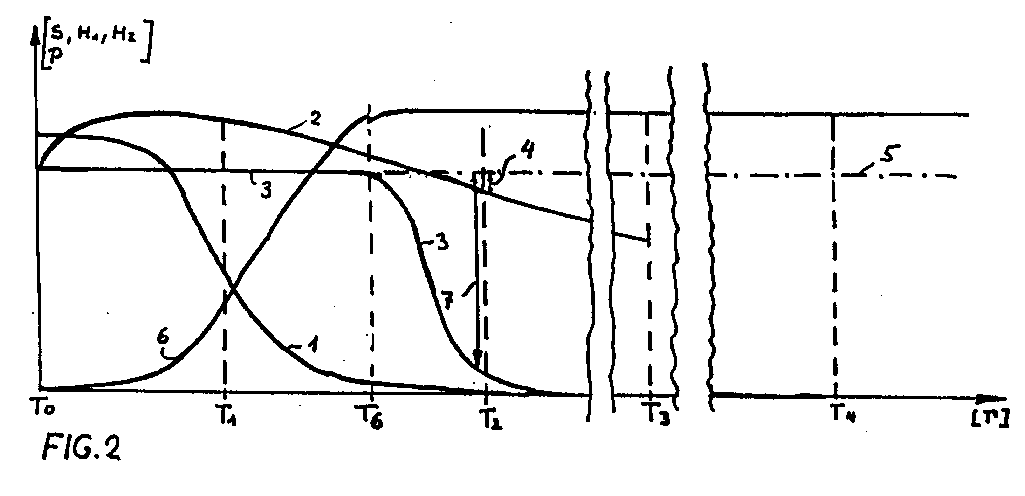

Das der Figur 1 entsprechende Diagramm für dieses Ausführungsbeispiel ist in Figur 2 dargestellt. Die Bezeichnungen sind dabei die gleichen wie im Text zu Beispiel 1 erläutert. Der Verlauf der Kurven 1, 2 und 6 ist im wesentlichen der gleiche wie nach Figur 1. Bemerkenswert ist, daß zum Zeitpunkt T6 nur ein fast unmerklicher Sprung im Druckverlauf der Kurve 6 zu sehen ist, der sich ergibt beim druckdichten Einschleusen der zweiten Hefeportion in den druckdicht verschlossenen Tank. Die Kurve 3 beginnt erst bei T6 mit dem Einfüllen der zweiten Hefeportion und fällt infolge der gegenüber Beispiel 1 herabgesetzten Autolysestabilität steiler ab und erreicht in T2 fast den gleichen Wert wie nach Figur 1. Die Kurve 2 hat einen etwas anderen Verlauf, so daß der Prozentsatz gemäß Doppelpfeil 4 12 % beträgt.

Die Beurteilung des Ergebnisses ist die gleiche wie nach Beispiel 1.

Die nachfolgenden Beispiele unterscheiden sich von den Beispielen 1 bis 3 nur durch die aus der nachfolgenden Tabelle ersichtlichen Angaben. Die Angaben in der Tabelle beziehen sich also auch bei den Beispielen 1 bis 3 auf 100 l (Liter) eingesetzten Grundwein.

TABELLE 1- Teil 1

| Beispiel | 4 | 5 | 6 | 7<br>Nullprobe |
|---|---|---|---|---|

**Fülldosage**

| | 4 | 5 | 6 | 7 Nullprobe |
|---|---|---|---|---|
| Saccharose kg | 2,5 | 2,5 | 2,5 | 2,5 |
| 1. Hefeportion kg (TS) | 0,02 | 0,02 | 0,02 | 0,02 |
| Art DSM | 70457 | 70457 | 70469 | 70457 |
| 2. Hefeportion kg (TS) | 0,02 | 0,02 | 0,02 | 0 |
| Art DSM | 70457 | 70469 | 70451 | --- |
| Behandlungs-temperatur $^{\circ}C$ | 35 | 45 | 55 | --- |
| Behandlungs-dauer Stunden | 40 | 30 | 10 | --- |

**Roher Schaumwein**

| | 4 | 5 | 6 | 7 Nullprobe |
|---|---|---|---|---|
| Anteil in Lösung gegangener Inhalts-stoffe aus der 1. Hefeportion in % | 20 | 20 | 25 | 20 |
| Anteil in Lösung gegangener Inhalts-stoffe aus der 2. Hefeportion in % | 90 | 95 | 95 | --- |

**Dauer der ersten Gärung**

| | 4 | 5 | 6 | 7 Nullprobe |
|---|---|---|---|---|
| T0 bis T2 in Tagen | 20 | 20 | 20 | 20 |

**Lagerzeit**

| | 4 | 5 | 6 | 7 Nullprobe |
|---|---|---|---|---|
| T2 bis T3 in Tagen | 40 | 60 | 20 | 60 |

TABELLE 1 - Fortsetzung Teil 1

| Beispiel | 4 | 5 | 6 | 7 Nullprobe |
|---|---|---|---|---|
| Zugabe der 2. Hefeportion | | | | |
| vor T0 | ja | ja | ja | ja |
| nach T0 in Tagen | --- | --- | --- | --- |
| Im übrigen nach Beispiel | 1 | 1 | 1 | 1 |
| Beurteilung | | | | |
| Aroma: | D | D | D | F |
| Mousseux: | A | A | A | C |
| Niederschlag: | G | G | G | I |

TABELLE 1 - Teil 2

| Beispiel | 8 | 9 | 10 | 11 Nullprobe |
|---|---|---|---|---|
| **Fülldosage** | | | | |
| Saccharose kg | 2,5 | 2,5 | 2,5 | 2,5 |
| 1. Hefeportion kg (TS) | 0,02 | 0,02 | 0,02 | 0,02 |
| Art DSM | 70459 | 70459 | 70469 | 70459 |
| 2. Hefeportion kg (TS) | 0,02 | 0,03 | 0,01 | 0 |
| Art DSM | 70459 | 70451 | 70457 | --- |
| Behandlungs- temperatur °C | 48 | 48 | 48 | --- |
| Behandlungs- dauer Stunden | 20 | 20 | 20 | --- |
| **Roher Schaumwein** | | | | |
| Anteil in Lösung gegangener Inhalts- stoffe aus der 1. Hefeportion in % | 10 | 15 | 10 | 10 |
| Anteil in Lösung gegangener Inhalts- stoffe aus der 2. Hefeportion in % | 85 | 90 | 90 | --- |
| **Dauer der ersten Gärung** T0 bis T2 in Tagen | 20 | 20 | 20 | 20 |
| **Lagerzeit** T2 bis T3 | 40 | 30 | 50 | 60 |
| **Zugabe der 2. Hefeportion** vor T0 | ja | ja | ja | ja |
| nach T0 in Tagen | --- | --- | --- | --- |

8

TABELLE 1 - Fortsetzung Teil 2

| Beispiel | 8 | 9 | 10 | 11 Nullprobe |
|---|---|---|---|---|
| Im übrigen nach Beispiel | 2 | 2 | 2 | 2 |
| Beurteilung | | | | |
| Aroma: | D | D | E | F |
| Mousseux: | A | A | B | C |
| Niederschlag: | G | G | G | I |

9

TABELLE 1- Teil 3

| Beispiel | 12 | 13 | 14 |
| --- | --- | --- | --- |
| **Fülldosage** | | | |
| Saccharose kg | 2,5 | 2,5 | 2,5 |
| 1. Hefeportion kg (TS) | 0,02 | 0,02 | 0,02 |
|    Art DSM | 70457 | 70457 | 70469 |
| 2. Hefeportion kg (TS) | 0,02 | 0,02 | 0,02 |
|    Art DSM | 70457 | 70469 | 70451 |
|    Behandlungs-temperatur $^{\circ}$C | 38 | 48 | 58 |
|    Behandlungs-dauer Stunden | 50 | 40 | 20 |
| **Roher Schaumwein** | | | |
| Anteil in Lösung gegangener Inhalts-stoffe aus der 1. Hefeportion in % | 20 | 20 | 25 |
| Anteil in Lösung gegangener Inhalts-stoffe aus der 2. Hefeportion in % | 90 | 95 | 95 |
| **Dauer der ersten Gärung** | | | |
| T0 bis T2 in Tagen | 20 | 20 | 20 |
| **Lagerzeit** | | | |
| T2 bis T3 in Tagen | 40 | 60 | 20 |

## TABELLE 1 - Fortsetzung Teil 3

| Beispiel | 12 | 13 | 14 |
|---|---|---|---|

**Zugabe der 2. Hefeportion**

| | 12 | 13 | 14 |
|---|---|---|---|
| vor T0 | nein | nein | nein |
| nach T0 in Tagen | 15 | 19 | 9 |
| **Im übrigen nach Beispiel** | 3 | 3 | 3 |

**Beurteilung**

| | 12 | 13 | 14 |
|---|---|---|---|
| Aroma: | D | D | D |
| Mousseux: | A | A | A |
| Niederschlag: | G | G | G |

Die in TABELLE 1 verwendeten Abkürzungen haben die aus TABELLE 2 ersichtliche Bedeutung:

TABELLE 2

| Abkürzung | Bedeutung |
|---|---|
| A | hochfeinperliges Champagnermousseux |
| B | feinperliges Mousseux |
| C | grobperliges Mousseux |
| D | champagnertypisches Aroma, reif |
| E | harmonisch, abgerundet, reif |
| F | grün, unharmonisch, unreif |
| G | klar |
| H | gerade wahrnehmbare Trübung |
| I | deutliche Trübung |

**Patentansprüche**

1. Verfahren zur Herstellung von Schaumwein,
   bei dem von entkeimtem Wein (sogenanntem Grundwein) ausgegangen wird, dem Hefe und Saccharose (sogenannte Fülldosage) zugegeben wird, und dann der tiragierte Grundwein unter Druckabschluß einer zweiten Gärung unterworfen wird und die in Lösung gehenden Inhaltsstoffe der Hefe im entstehenden rohen Schaumwein enthalten sind, und
   bei dem dann die unlöslichen Bestandteile abgeschieden und dem rohen Schaumwein Saccharose und eventuell weitere Zusätze (sogenannte Versanddosage) zugesetzt wird, dadurch gekennzeichnet,
   daß dem Grundwein vor dem Ende der zweiten Gärung zusätzlich eine zweite Hefeportion zugegeben wird, deren Autolysestabilität durch Schädigung der Zellwände vor der Zugabe an den Grundwein herabgesetzt ist.

2. Verfahren nach Anspruch 1, dadurch gekennzeichnet,
   daß die zweite Hefeportion, insbesondere bei Flaschengärung nach der Champagner-Methode, vor der zweiten Gärung zugegeben wird.

3. Verfahren nach Anspruch 1, dadurch gekennzeichnet,

EP 0 325 193 B1

daß bei Tankgärung die zweite Hefeportion während der zweiten Gärung, vorzugsweise nach Ablauf der Hälfte der Gesamtzeitspanne für die zweite Gärung, zugegeben wird.

4. Verfahren nach einem der vorhergehenden Ansprüche, dadurch gekennzeichnet,

daß die Autolysestabilität der zweiten Hefeportion so eingestellt ist, daß der Prozentanteil der Zellen der zweiten Hefeportion, deren Zellwände durch Autolysation aufgebrochen sind,wenn 60 % der eingesetzten Saccharose durch die zweite Gärung aufgebraucht sind, 10 bis 20 %, vorzugsweise 18 %, der eingesetzten Menge der zweiten Hefeportion beträgt.

5. Verfahren nach einem der vorhergehenden Anspruche, dadurch gekennzeichnet,

daß der Prozentanteil ermittelt wird, indem von einer während der zweiten Gärung entnommenen Portion die Hefezellen mit aufgebrochenen Zellwänden selektiv eingefärbt werden, vorzugsweise mit Methylenblau, und die so gekennzeichneten Hefezellen mit aufgebrochenen Zellwänden ausgezählt und die durch unregelmäßige Form auffälligen Hefezellen der zweiten Hefeportion ausgezählt, mit der Summe beider Zählungen ins Verhältnis gesetzt werden.

6. Verfahren nach einem der vorhergehenden Ansprüche, dadurch gekennzeichnet,

daß die Autolysestabilität herabgesetzt wird durch Erwärmen auf 40 bis 55°, vorzugsweise auf 48° C (Grad Celsius), und zwar über eine Zeitdauer von 10 bis 40, vorzugsweise 20 Stunden, unter gleichzeitigem Rühren.

7. Verfahren nach einem der vorhergehenden Ansprüche, dadurch gekennzeichnet,

daß 0,01 bis 0,06 kg (Kilogramm), vorzugsweise 0,02 kg, Trockensubstanz erste Hefeportion pro 100 Liter und 0,5 bis 2 mal, vorzugsweise 1 mal soviel, jeweils bezogen auf das Trockengewicht, zweite Hefeportion jeweils vor Beginn der zweiten Gärung eingesetzt wird.

8. Verfahren nach einem der vorhergehenden Ansprüche, dadurch gekennzeichnet,

daß die Lagerzeit abgebrochen wird und die unlöslichen Bestandteile abgeschieden werden, sobald aus beiden eingesetzten Hefeportionen zusammengenommen Inhaltsstoffe in Lösung gegangen sind in einer Menge, die 95 bis 120%, vorzugsweise 110% der löslichen Inhaltsstoffe der eingesetzten ersten Hefeportion entspricht.

9. Verfahren nach Anspruch 8, dadurch gekennzeichnet,

daß die Lagerzeit abgebrochen wird und die unlöslichen Bestandteile abgeschieden werden 20 bis 60 Tage, vorzugsweise 40 Tage, nachdem die gesamte Saccharose aufgebraucht ist.

10. Verfahren nach einem der vorhergehenden Ansprüche, dadurch gekennzeichnet,

daß für beide Hefeportionen der gleiche Hefestamm eingesetzt wird.

11. Verfahren nach einem der vorhergehenden Ansprüche, dadurch gekennzeichnet,

daß für beide Hefeportionen einer oder für jede der beiden Hefeportionen ein jeweils anderer der nachfolgend aufgeführten, Hefestämme eingesetzt werden:
1) Saccharomyces cerevisiae, Strain Champagner, DSM (Deutsche Sammlung für Mikroorganismen, Göttingen) unter der Nummer 70457
2) Saccharomyces cerevisiae, Strain Kaltgärhefe, DSM Nr. 70469
3) Saccharomyces cerevisiae, Strain Rüdesheimer, DSM Nr. 70451
4) Saccharomyces cerevisiae, Strain Champagner-Ay, DSM Nr. 70459.

**Claims**

1. A process for the production of sparkling wine,
in which the basis is sterilised wine (base wine) to which yeast and sucrose (liqueur de tirage) are added, and then after tirage the base wine is subjected to a second fermentation under pressure and the dissolving components of the yeast are contained in the resulting raw sparkling wine, and
in which the insoluble constituents are then separated and sucrose and possibly further supplements (liqueur d'expédition) are added to the raw sparkling wine, characterised in that
in addition a second yeast portion is added to the base wine before the end of the second fermentation, the autolysis stability of this portion being reduced by damage to the cell walls before it is added to the

12

base wine.

2. A process as claimed in claim 1, charaterised in that the second yeast portion, especially in the case of fermentation in bottle by the méthode champenoise, is added before the second fermentation.

3. A process as claimed in claim 1, characterised in that in the case of tank fermentation the second yeast portion is added during the second fermentation, preferably after half of the total duration of the second fermentation has elapsed.

4. A method as claimed in any of the preceding claims, characterised in that the autolysis stability of the second yeast portion is so adjusted that the percentage of cells in the second yeast portion of which the cell walls have been broken open by autolysis when 60% of the sucrose introduced has been consumed by the second fermentation is 10 to 20%, preferably 18%, of the quantity of second yeast portion introduced.

5. A process as claimed in any of the preceding claims, characterised in that to obtain the percentage, in a portion extraced during the second fermentation the yeast cells with broken cell walls are selectively tinted, preferably with methylene blue, and the so marked yeast cells with broken cell walls counted and the yeast cells distinguished by an irregular shape in the second yeast portion counted are correlated with the sum of the two counts.

6. A process as claimed in any of the preceding claims, characterised in that the autolysis stability is reduced by heating to 40 to 55°, preferably to 48°C (degrees Celsius), over a period of 10 to 40, preferably 20, hours, with simultaneous stirring.

7. A process as claimed in any of the preceding claims, characterised in that 0,01 to 0,06 kg (kilograms), preferably 0,02 kg, dry substances of a first yeast portion per 100 litres and 0,5 to 2 times as much, preferably once as much, of a second yeast portion, both relative to the dry weight, are introduced before the beginning of the second fermentation.

8. A method as claimed in any of the preceding claims, characterised in that the storage time is curtailed and the insoluble constituents are separated as soon as components collected from the two yeast portions introduced have dissolved in a quantity equal to 95 to 120% preferably 110%, of the soluble components of the first yeast portion introduced.

9. A process as claimed in claim 8, characterised in that the storage time is curtailed and the insoluble constituents are separated 20 to 60 days, preferably 40 days, after all sucrose has been consumed.

10. A process as claimed in any of the preceding claims, characterised in that the same yeast strain is used for both yeast portions.

11. A process as claimed in any of the preceding claims, characterised in that for both yeast portions one, or for each of the two yeast portions a different one, of the yeast strains listed below is used:
   1) Saccharomyces cerevisiae, strain Champagne, DSM (Deutsche Sammlung fur Mikroorganismen, Göttingen) under number 70457;
   2) Saccharomyces cerevisiae, strain cold fermentation yeast, DSM No. 70469;
   3) Saccharomyces cerevisiae, strain Rüdesheimer, DSM No. 70451;
   4) Saccharomyces cerevisiae, strain Champagne-Ay, DSM No. 70459.

**Revendications**

1. Procédé de préparation de vin mousseux dans lequel on part de vin égermé (vin de base) auquel on ajoute de la levure et du saccharose (dose de remplissage), ensuite on soumet le vin de base soutiré, en maintenant la pression, à une deuxième fermentation, les substances contenues dans la levure qui se dissolvent étant alors contenues dans le vin mousseux brut, et dans lequel les composants insolubles sont séparés et le vin mousseux brut est additionné de saccharose et éventuellement d'autres additifs (dose d'expédition), ce procédé étant caractérisé par le fait que l'on ajoute au vin de base, additionnellement, avant la fin de la deuxième fermentation, une seconde proportion de levure dont la stabilité à l'autolyse est diminuée avant l'addition au vin de base, par endommagement des parois cellulaires.

2.  Procédé selon la revendication 1, caractérisé par le fait que la deuxième proportion de levure, en particulier lors d'une fermentation en bouteilles selon la méthode champenoise, est ajoutée avant la deuxième fermentation.

3.  Procédé selon la revendication 1, caractérisé par le fait que lors d'une fermentation en cuve, la deuxième proportion de levure est ajoutée pendant la deuxième fermentation, de préférence après que la moitié de la durée totale de la deuxième fermentation se soit écoulée.

4.  Procédé selon l'une des revendications précédentes, caractérisé par le fait que la stabilité à l'autolyse de la deuxième proportion de levure est réglée de manière à ce que le pourcentage des cellules de la deuxième proportion de levure, dont les parois cellulaires ont éclaté par autolyse lorsque 60% du saccharose mis en oeuvre sont consommés par la deuxième fermentation, représentent 10 à 20 % de préférence 18 % de la quantité mise en oeuvre de la deuxième proportion de levure.

5.  Procédé selon l'une des revendications précédentes, caractérisé par le fait que l'on détermine le pourcentage en colorant sélectivement, de préférence avec du bleu de méthylène, une proportion de cellules de levure à parois cellulaires éclatées, prélevée pendant la deuxième fermentation, on dénombre les cellules de levure à parois cellulaires éclatées ainsi caractérisées, on dénombre les cellules de levure de la deuxième portion de levure qui frappent par une forme irrégulière et on les met en rapport avec la somme des deux dénombrements.

6.  Procédé selon l'une des revendications précédentes, caractérisé par le fait que la stabilité à l'autolyse est diminuée par chauffage à 40 à 55 degrés C, de préférence à 48 degrés C, pendant une durée de 10 à 40 heures, de préférence 20 heures, tout en brassant.

7.  Procédé selon l'une des revendications précédentes, caractérisé par le fait que l'on utilise, dans chaque cas avant le début de la deuxième fermentation, 0,01 à 0,06 kg d'extrait sec de première proportion de levure, de préférence 0,02 kg pour 100 l, et 0,5 à 2 fois cette quantité, de préférence la même quantité de deuxième proportion de levure, chaque fois rapporté au poids d'extrait sec.

8.  Procédé selon l'une des revendications précédentes, caractérisé par le fait que l'on arrête le mutage et on sépare les composants insolubles dès qu'à partir des deux proportions de levure mises en oeuvre s'est dissoute, au total une quantité de substances représentant 95 à 120 %, de préférence 110 % des substances solubles contenues dans la première proportion de levure mise en oeuvre.

9.  Procédé selon la revendication 8, caractérisé par le fait que l'on arrête le mutage et sépare les composants insolubles après 20 à 60 jours, de préférence 40 jours depuis la consommation de la totalité du saccharose.

10. Procédé selon l'une des revendications précédentes, caractérisé par le fait que pour les deux proportions de levure, on utilise la même souche de levure.

11. Procédé selon l'une des revendications précédentes, caractérisé par le fait que pour les deux proportions de levure, on utilise une des souches de levure citées ci-après ou deux souches différentes de ce type :
    1) Saccharomyces cerevisiae, Strain Champagner, DSM (Deutsche Sammlung für Mikroorganismen, Göttingen) Nr. 70457
    2) Saccharomyces cerevisiae, Strain Kaltgärhefe, DSM Nr. 70469
    3) Saccharomyces cerevisiae, Strain Rüdesheimer, DSM Nr. 70451
    4) Saccharomyces cerevisiae, Strain Champagner-Ay, DSM Nr. 70459.

FIG.1

FIG.2